# EUROPEAN PATENT APPLICATION

(11) **EP 0 867 213 A1**
(43) Date of publication of application: **30.09.1998**
(21) Application number: 98200786.6
(22) Date of filing: 12.03.1998
(51) Int. Cl.: B01D 17/032, B01D 17/025, B01D 17/028

(54) **Device for separating oil from condensate**

(30) Priority: 25.03.1997 BE 9700262
(71) Applicant: ATLAS COPCO AIRPOWER N.V., 2610 Wilrijk (BE)
(72) Inventor: Talboom, Bart Anton Lode, 2550 Kontich (BE)
(74) Representative: Donné, Eddy

(57) **Abstract**

Device for separating oil from condensate originating from a condensate separator separating condensate from compressed air, whereby this device comprises a coalescence filter (1); an upright separation tank (2) connected thereto in which oil and water are separated by their difference in density, which is provided at its top with an oil overflow (4); an upright water duct (6) which is fixed in respect to the separation tank (2), which is connected to this separation tank (2) solely at the bottom by means of a passage (7) but further is separated from the separation tank (2) up to beyond the oil overflow (4); and a water overflow (9) situated lower than the oil overflow (4), characterized in that the device comprises an upright oil duct (3) and a second upright water duct (8), whereby the oil duct (3) is in connection with the separation tank (2) only by means of said oil overflow (4) and is provided with an outlet (5) below, whereas said first water duct (6) below is in connection with the separation tank (2) by means of said passage (7), and the second water duct (8) is in connection with the first water duct (6) by means of the water overflow (9) and is also provided with an outlet (10) below.

## Description

This invention relates to a device for separating oil from condensate originating from a condensate separator separating condensate from compressed air, whereby this device is of the type comprising a coalescence filter; an upright separation tank connected thereto in which oil and water are separated by their difference in density, which is provided at its top with an oil overflow; an upright water duct which is fixed in respect to the separation tank, which is connected to this separation tank solely at the bottom by means of a passage but further is separated from the separation tank up to beyond the oil overflow; and a water overflow situated lower than the oil overflow.

Condensate separators are installed after an oil-lubricated compressor, a compressed-air dryer, a compressed-air pressure vessel or a filter in the compressed-air pipe.

The condensate of the condensate separator, which comprises emulgated oil, is supplied under pressure to the coalescence filter where this oil is transformed to larger droplets. In the separation tank, these large droplets are separated on the basis of a difference in specific weight, whereby the oil floats on the water.

In the known devices, the oil overflow and the water overflow are formed by outlets which, thus, are situated on top, for example by elbow conduits whereof one leg forms the overflow and the other leg, to which a discharge conduit is connected, is directed downward.

This known device can be constructed relatively compact in such a manner that it even can be integrated in a compressor.

A disadvantage of this known device, however, is that the pressure-free discharge of the condensate or water from the device sometimes is hindered.

Substantially, the space inside the casing of the compressor is under a negative pressure which may slow down the free discharge. The oil overflow is in contact with the oil reservoir situated inside the casing.

The free drain may also be hindered when an airseal is in the water conduit connected to the water drain, or when this water conduit is too long.

Also due to the very small height difference between the water overflow and the oil overflow which, for example, is only 8 mm, the risk is very high that the discharge is disturbed and the condensate flows off through the oil overflow. This might be the case when the negative pressure in the compressor casing increased with the pressure drop over the drain conduit of the water is higher than said height difference in water.

The water overflow is in connection with the exterior of the casing, which exterior is not under a negative pressure.

Consequently, said known devices are very sensitive for the negative pressure inside the casing, and the construction of the outlet conduit connected to the outlet of the device is very critical.

It is an aim of the present invention to remedy these disadvantages and to provide a device for separating oil from condensate which is less sensitive to negative pressures in the casing or to the construction of the water drain conduit.

This aim is realized according to the invention as the device comprises an upright oil duct and apart from said first water duct a second upright water duct, whereby the oil duct is in connection with the separation tank only by means of said oil overflow and is provided with an outlet below, whereas said first water duct below is in connection with the separation tank by means of a passage, and the second water duct is in connection with the first water duct by means of the water overflow and is also provided with an outlet below.

Preferably, the oil duct and the two water ducts are located at one and the same side of the separation tank.

The outlets with which the oil duct and the water duct are provided, preferably are situated in the closed-off lower extremity of these ducts. To these outlets, downward directed mouth pieces or connection pieces can be connected, upon which then a flexible pipe can be attached.

In order to better show the characteristics of the invention, hereafter, as an example without limitative character, a preferred form of embodiment of a device for separating oil from condensate according to the invention is described, with reference to the accompanying drawings, wherein:
figure 1 represents a plan view of a device for separating oil from condensate according to the invention;
figure 2 represents a cross-section according to line II-II in figure 1.

The device for separating oil from condensate represented in the figures consists of a coalescence filter 1 and thereabove an upright separation tank 2 with which the coalescence filter 1 is in connection, an upright oil duct 3 which is connected to the separation tank 2 by means of an oil overflow 4 and is provided with an outlet 5 below, a first upright water duct 6 which is in connection with the separation tank 2 by means of a passage 7 below, and a second upright water duct 8 which is connected to the first water duct 6 by means of a water overflow 9 and is provided with an outlet 10 below.

The oil duct 3 and the two water ducts 6 and 8 all are located adjacent to each other in one line along one side of the approximately square separation tank 2, whereby this separation tank 2, however, at the aforementioned side is situated with a protruding upright part 11 next to the oil duct 3. This protruding part 11 as well as the oil duct 3 and the water ducts 6 and 8 have an almost square cross-section with the same width.

The coalescence filter 1 can be of a known type and consequently will not be described here in detail.

The inlet conduit 12 for condensate which connects to this coalescence filter 1 extends above the bottom of the separation tank 2 and gives out in the proximity of the exterior wall of the coalescence filter 1.

The coalescence filter 1 is in connection with the separation tank 2 by means of a vertical central round pipe 13 extending into the separation tank 2 up to a distance from the bottom 14 of the separation tank 2. This pipe 13 ends at a height which is considerable lower than the overflows 4 and 9.

This pipe 13 is surrounded in the separation tank 2, for example, by a labyrinth formed by two concentric pipes 15 and 16 which are standing upright on the bottom 14 and do not only extend higher than the pipe 13, but even higher than the water overflow 9 and the oil overflow 4.

The intermediate pipe 15 is, over its complete height, open at the side of the oil duct 3 and the water ducts 6 and 8, whereas the outer pipe 16 at the opposite side is open over its complete height.

The passage 7 for water is a small pipe which is arranged just above the bottom 14, through the upright walls of the separation tank 2 and the water duct 6.

The water overflow 9 is formed in that the upright partition between the two water ducts 6 and 8 is somewhat smaller than other upright walls of these ducts 6 and 8 and than the upright wall of the separation tank 2.

In an analogous manner, the oil overflow 4 is formed in that the common upright wall between the protruding part 11 of the separation tank 2 and the oil duct 3 is somewhat lower than the remainder of the walls of this oil duct 3 and the separation tank 2.

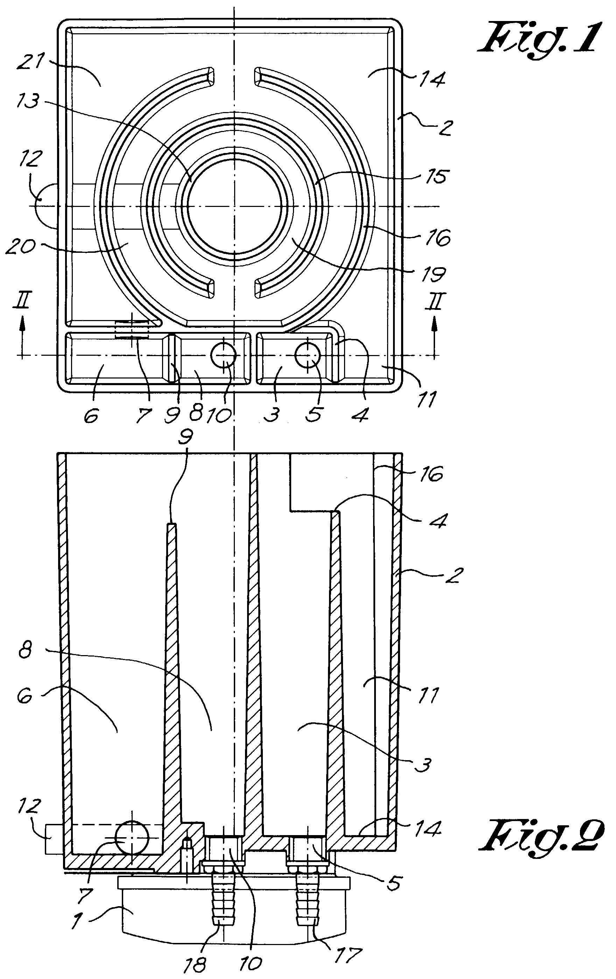

The oil overflow 4 is situated somewhat, preferably approximately eight millimeters, higher than the water overflow 9, such as represented in detail in figure 2.

The outlets 5 and 10 are situated in a lower closed extremity or bottom of the oil duct 3 and the second water duct 8, respectively. To these outlets 5 and 10 connect downward directed connection pieces 17, 18 respectively, at which a flexible pipe can be mounted.

As the coalescence filter 1 has a diameter which is smaller than the width of the separation tank 2, the connection pieces 17 and 18 forming the outlets 5 and 10 are situated next to the coalescence filter 1.

The working of the device described heretofore is simple and as follows.

Condensate in which oil is emulgated and which has been separated from the compressed air in a condensate separator of a compressor unit is supplied under pressure through the supply conduit 12 to the coalescence filter 11 where the oil transforms into larger droplets.

The mixture of water and oil droplets is forced through the central pipe 13 into the separation tank 2.

In the separation tank, the oil floats on the water as a result of the difference in density. The liquid flows over the upper edge of the pipe 13, through the ring-shaped chamber 19 between the pipe 13 and the pipe 15 situated in between, subsequently through the open side of this pipe 15 into the chamber 20 between the pipes 15 and 16, and finally into the chamber 21 around this pipe 16.

From there, the water flows through the passage 7 into the first water duct 6 and subsequently over the water overflow 9 to the second water duct 8. The water leaves this water duct 8 through the outlet 10 and the connection piece 18. By means of a pipe connected thereto, the water is drained outside the housing of the compressor.

The oil floating on top in the chamber 21 flows over the higher situated oil overflow 4 from the protruding part 11 of the separation tank 2 into the oil duct 3.

The oil leaves this oil duct 3 through the outlet 5 and the connection piece 17 connected thereto. Through a pipe mounted on this connection piece, said oil is fed back to the oil reservoir.

When the device described heretofore is situated in an environment under negative pressure, the influence of this negative pressure onto the device may be excluded by means of a water column being formed in the water duct 8.

Depending on the strength of the cooling air stream, the negative pressure in the housing of the compressor can be 4 to 10 mm. A water column of 150 to 200 mm can be created in the water duct 8.

Without necessitating an increase of the diameter of the outlet 10 for the water or of the connection piece 18 and the pipe attached thereto, it is avoided that the operation of the device is disturbed by a negative pressure in the housing and that water flows over the oil overflow 4.

The construction of the outlet 10, the connection piece 18 and the conduit attached thereto are a lot less crucial.

The present invention is in no way limited to the form of embodiment described heretofore and represented in the figures, on the contrary may such device for separating oil from condensate be realized in various variants without leaving the scope of the invention.

## Claims

1. Device for separating oil from condensate originating from a condensate separator separating condensate from compressed air, whereby this device comprises a coalescence filter (1); an upright separation tank (2) connected thereto in which oil and water are separated by their difference in density, which is provided at its top with an oil overflow (4); an upright water duct (6) which is fixed in respect to the separation tank (2), which is connected to this separation tank (2) solely at the bottom by means of a passage (7) but further is separated from the separation tank (2) up to beyond the oil overflow (4); and a water overflow (9) situated lower than the oil overflow (4), characterized in that the device comprises an upright oil duct (3) and a second upright water duct (8), whereby the oil duct (3) is in connection with the separation tank (2) only by means of said oil overflow (4) and is provided with an outlet (5) below, whereas said first water duct (6) below is in connection with the separation tank (2) by means of said passage (7), and the second water duct (8) is in connection with the first water duct (6) by means of the water overflow (9) and is also provided with an outlet (10) below.

2. Device according to claim 1, characterized in that the oil duct (3) and the two water ducts (6 and 8) are situated at one and the same side of the separation tank (2).

3. Device according to claim 2, characterized in that the separation tank (2) comprises a protruding part (11) which is situated next to the oil duct (3).

4. Device according to claim 3, characterized in that the oil overflow (4) is formed by the wall between this part (11) and the oil duct (3).

5. Device according to any of the preceding claims, characterized in that the outlets (5 and 10) with which the oil duct (3) and a water duct (8) are provided, are situated in the closed-off lower extremity of these ducts (3 and 8).

6. Device according to claim 5, characterized in that to these outlets (5 and 10), downward directed nozzles or connection pieces (17 and 18) are connected.

7. Device according to any of the preceding claims, characterized in that the coalescence filter (1) is in connection with the separation tank (2), by means of a central pipe (13) extending in the middle up into the separation tank (2) and is open or ends up at a height which is lower than the water overflow (9).

8. Device according to any of the preceding claims, characterized in that the distance between oil overflow (4) and water overflow (9) is approximately 8 mm.
